# EUROPEAN PATENT APPLICATION

(11) **EP 4 687 209 A1**
(43) Date of publication of application: **04.02.2026**
(21) Application number: 25186527.5
(22) Date of filing: 01.07.2025
(51) Int. Cl.: H01M 50/342

(54) **SECONDARY BATTERY**

(30) Priority: 01.08.2024 KR 20240102663
(71) Applicant: SAMSUNG SDI CO., LTD., Yongin-si, Gyeonggi-do 17084 (KR)
(72) Inventor: HWANG, Youngjin, 17084 Yongin-Si, Gyeonggi-do (KR)
(74) Representative: Gulde & Partner

(57) **Abstract**

A secondary battery includes: an electrode assembly; a case accommodating the electrode assembly therein; a vent hole in the case; one or more bridge portions connected to opposite ends of the vent hole; and a vent portion sealing the vent hole.

## Description

### BACKGROUND

### 1. Field

Aspects of embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A vent of a secondary battery enhances the safety of the battery by being ruptured by an internal gas pressure of the battery.

The above information disclosed in this Background section is for enhancement of understanding of the background of the present disclosure, and therefore, it may contain information that does not constitute related (or prior) art.

### SUMMARY

A thickness of a portion to be ruptured (e.g., a ruptured portion) inside the vent may only be several to several tens of micrometers, and thus, there may be a risk that cracks may occur in the ruptured portion (e.g., the portion to be ruptured), or the ruptured portion may be ruptured even by a small external impact. In other words, in a case where the vent is damaged, the reliability of the battery may deteriorate (e.g., may be decreased). Or in yet other words, if the case structure around the vent is deformed due to the influence of internal pressure for instance, the deformation may affect the normal rupture mechanism of a conventional vent and may cause premature rupture. The vent member may be formed integrally with a secondary battery case, or may be a vent member formed separately from a case and joined to (e.g., connected to or attached to) a vent hole formed in the case. Previously, changes and supplements to the structure of the vent member itself have been made in an attempt to improve safety, regardless of the vent member. However, it may be desirable to enhance a structural rigidity of a case rather than the vent member itself, without reducing a capacity of the secondary battery.

One or more embodiments of the present disclosure may be directed to a secondary battery including a vent portion and having improved safety and/or reliability.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a secondary battery includes: an electrode assembly; a case accommodating the electrode assembly therein; a vent hole in the case; one or more bridge portions (directly) connected to opposite ends of the vent hole; and a vent portion sealing the vent hole.

In an embodiment, the case may include: an opened first side; an opened second side opposite to the opened first side; a first long side wall portion and a second long side wall portion spaced from each other; and a first short side wall portion and a second short side wall portion spaced from each other, and having smaller areas than those of the first long side wall portion and the second long side wall portion. The vent hole may be located in the first short side wall portion.

In an embodiment, a longitudinal direction of the one or more bridge portions may be parallel to a width direction of the first short side wall portion.

In an embodiment, the one or more bridge portions may include one bridge portion located in a center of the vent hole.

In an embodiment, the one or more bridge portions may include an even number of bridge portions symmetrically located with one another with respect to a center of the vent hole.

In an embodiment, the one or more bridge portions may include an odd number of bridge portions, one bridge portion from among the odd number of bridge portions may be located in a center of the vent hole, and other remaining bridge portions from among the odd number of bridge portions may be located symmetrically with one another with respect to the center of the vent hole.

In an embodiment, a length of an area where the one or more bridge portions may be located from left to right based on a center line of the vent hole may be within 25% of a total length of the vent hole.

In an embodiment, a width of each of the one or more bridge portions may be 6% or more of a total length of the vent hole.

In an embodiment, the one or more bridge portions may include a plurality of bridge portions, and the plurality of bridge portions may have a same width as each other.

In an embodiment, a circumference of the vent hole may include a first step surface having a first step with an outermost surface of the case, and a second step surface having a second step with the first step surface. The first step surface may be connected to an upper surface of the vent portion, and the second step surface may be connected to an upper surface of the one or more bridge portions.

In an embodiment, a length of the second step surface may be greater than a length of the first step surface.

In an embodiment, the upper surface of the one or more bridge portions may be integral with the second step surface.

In an embodiment, a sum of the first step and the second step may be equal to or greater than a total thickness of the vent portion.

In an embodiment, a thickness of the one or more bridge portions may be equal to or less than a value obtained by subtracting a sum of the first step and the second step from a thickness of the case.

In an embodiment, a thickness of the one or more bridge portions may be 35% to 55% of a thickness of the first short side wall portion.

In an embodiment, the electrode assembly may include a first electrode plate and a second electrode plate. A first side plate may be joined to the opened first side, and a second side plate may be joined to the opened second side. A first terminal exposed to the outside through the first side plate may be electrically connected to the first electrode plate, and a second terminal exposed to the outside through the second side plate may be electrically connected to the second electrode plate.

According another preferred embodiment of the present disclosure, the secondary battery may include: an electrode assembly; a case accommodating the electrode assembly therein, and having one opened end; a cap plate joined to the one opened end of the case; a vent hole in the cap plate (e.g. the cap plate of the case); one or more bridge portions connected to opposite ends of the vent hole; and a vent portion sealing the vent hole.

In an embodiment, a longitudinal direction of the one or more bridge portions may be parallel to a width direction of the cap plate.

In an embodiment, the one or more bridge portions may include one bridge portion located in a center of the vent hole.

In an embodiment, when the one or more bridge portions include an even number of bridge portions, the bridge portions may be located symmetrically with one another with respect to a center of the vent hole. When the one or more bridge portions include an odd number of bridge portions, one bridge portion may be located in the center of the vent hole, and other remaining bridge portions may be located symmetrically with one another with respect to the center of the vent hole.

According to some embodiments of the present disclosure, a strain of the case or the cap plate around the vent portion may be reduced at a time of a rupture of the vent portion through a bridge portion formed in a vent hole of the secondary battery.

According to some embodiments of the present disclosure, by forming the bridge portion in the vent hole of the secondary battery, the strain of the case or the cap plate around the vent portion may be reduced, thereby preventing the vent portion from being ruptured at an early stage (e.g., preventing the vent portion from being prematurely ruptured).

According to some embodiments of the present disclosure, the vent portion may be ruptured at a target rupture pressure.

According to some embodiments of the present disclosure, loss that may be caused by increased manufacturing costs due to an increase in the number of parts and manufacturing processes due to the addition of the bridge portion may be reduced.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to an embodiment of the present disclosure;
FIG. 2 illustrates a perspective view of a case according to an embodiment of the present disclosure;
FIG. 3 illustrates a plan view of a secondary battery according to an embodiment of the present disclosure;
FIG. 4 illustrates an enlarged view showing an example of the area R in FIG. 3 from which a vent portion has been removed;
FIG. 5 illustrates a cross-sectional view taken along the line H-H of FIGS. 1 and 4;
FIG. 6 illustrates a cross-sectional view taken along the line B-B of FIGS. 1 and 4;
FIGS. 7-9 illustrate enlarged views showing examples of the area R in FIG. 3 from which a vent portion has been removed;
FIG. 10 illustrates a perspective view of a secondary battery according to an embodiment of the present disclosure; and
FIG. 11 illustrates a plan view of a secondary battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

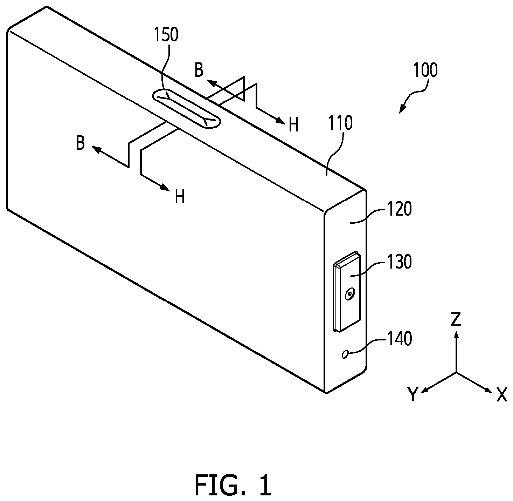

FIG. 1 illustrates a perspective view of a secondary battery according to an embodiment of the present disclosure. Hereinafter, a secondary battery 100 may be described in more detail in the context of a prismatic secondary battery, but the present disclosure is not limited thereto, and any suitable kinds of batteries in which a vent may be desired or installed may be applicable.

Referring to FIG. 1, the secondary battery 100 may include an electrode assembly, a case 110 accommodating the electrode assembly therein, a first side plate 120, a first terminal 130, a second side plate, and a second terminal. In addition, a vent hole may be formed in one side of the case 110, and a vent portion 150 that seals the vent hole may be arranged on the one side of the case. As illustrated in FIG. 1, the first terminal 130 may be arranged on the first side plate 120. The second terminal may be arranged on the second side plate opposite to the first side plate 120.

The electrode assembly may be accommodated in the case 110. The electrode assembly may be formed by winding or stacking a stack of a first electrode plate, a separator, and a second electrode plate formed in a thin plate shape or a film shape. In a case where the electrode assembly is a wound stack, the winding axis may be parallel to or substantially parallel to the longitudinal direction of the case. In addition, the electrode assembly may be a stack type rather than a wound type. However, the shape of the electrode assembly is not particularly limited thereto. The electrode assembly may be a Z-stack electrode assembly in which the first electrode plate and the second electrode plate are inserted on opposite sides of the separator folded in a Z-stack. In addition, the electrode assembly may be accommodated in the case 110 by stacking one or more electrode assemblies so that long sides thereof are adjacent to each other. However, the number of electrode assemblies is not particularly limited. In the electrode assembly, the first electrode plate may serve as a positive electrode, and the second electrode plate may serve as a negative electrode. In some embodiments, the first electrode plate may serve as a negative electrode, and the second electrode plate may serve as a positive electrode.

The first electrode plate may be formed by applying a first electrode active material, such as graphite or carbon, to a first electrode current collector plate formed of a metal foil, such as copper, a copper alloy, nickel, or a nickel alloy. The first electrode plate may include a first electrode tab (e.g., a first uncoated portion), which is a region where the first electrode active material is not applied. The first electrode tab may be a passage for a current flow between the first electrode plate and the first terminal 130. The first terminal 130 refers to a first electrode terminal, and is illustrated in a plate shape in FIG. 1. However, the present disclosure is not limited thereto, and the first terminal 130 may be in the form of a rivet. In some examples, the first electrode tab may be formed by cutting to protrude toward another side (e.g., an opposite side) in advance in a case of manufacturing the first electrode plate, and may further protrude toward one side than the separator without a separate cutting.

The second electrode plate may be formed by applying a second electrode active material, such as a transition metal oxide, to a second electrode current collector plate formed of a metal foil, such as aluminum or an aluminum alloy. The second electrode plate may include a second electrode tab (e.g., a second uncoated portion), which is a region where the second electrode active material is not applied. The second electrode tab may be a passage for a current flow between the second electrode plate and the second terminal. The second terminal refers to a second electrode terminal, and may be in the form of a plate, a rivet, or the like. In some examples, the second electrode tab may be formed by cutting to protrude toward the other side (e.g., an opposite side) in advance in a case of manufacturing the second electrode plate, and may further protrude toward one side than the separator without a separate cutting.

In some examples, the first electrode tab may be located on the right side of the electrode assembly, and the second electrode tab may be located on the left side of the electrode assembly. The left side and the right side are described based on the secondary battery 100 illustrated in FIG. 1, but the present disclosure is not limited thereto, and the positions thereof may change in a case where the secondary battery 100 rotates left and right or up and down.

In some examples, an electrolyte injection port 140 may be formed on the first side plate 120. An electrolyte may be injected into the case 110 through the electrolyte injection port 140. In FIG. 1, the electrolyte injection port 140 is illustrated as being formed on the first side plate 120, but the present disclosure is not limited thereto. After the injection of the electrolyte is completed, the electrolyte injection port 140 may be sealed using a sealing member or a sealing means, such as a stopper.

In an embodiment, the vent portion 150 may be arranged on the vent hole formed on one side of the case 110. For example, the vent portion 150 may be formed on the upper surface or the lower surface of the case 110. The upper surface or the lower surface of the case 110 may refer to the surface facing upward or downward in a case where the secondary battery 100 is finally installed. The vent portion 150 may prevent or substantially prevent an explosion of the secondary battery 100, and/or may prevent or substantially prevent a chain exothermic reaction of another secondary battery arranged close to (e.g., adjacent to) the secondary battery.

The vent portion 150 according to an embodiment may be ruptured in a case where the internal pressure of the secondary battery 100 exceeds a threshold pressure (e.g., a certain or predetermined threshold pressure). The threshold pressure may be adjusted differently depending on the material of the secondary battery, the intended use thereof, and/or the like. As another example, the vent portion 150 may be ruptured in a case where the internal temperature exceeds a threshold temperature (e.g., a certain or predetermined threshold temperature).

In FIG. 1, one vent portion 150 is illustrated as being formed in the center of the upper surface of the case 200, but the present disclosure is not limited thereto. In other embodiments, any suitable number of vent portions 150 may be formed at any suitable positions on one side of the case 110. For example, two or more vent portions 150 may be formed on the upper surface of the case 110.

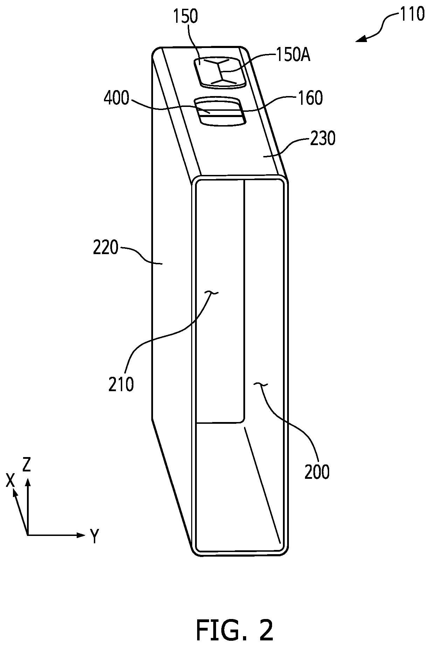

FIG. 2 illustrates a perspective view of the case according to an embodiment of the present disclosure.

Referring to FIGS. 1 and 2, the case 110 may include opposing long side wall portions 220, opposing short side wall portions 230, an opened first side 200, and an opened second side 210. The case 110 may be formed of a metal or a conductive metal. For example, the case 110 may be formed of a metal, such as aluminum, an aluminum alloy, or a nickel-plated steel.

The long side wall portion 220 may include a first long side wall portion and a second long side wall portion. The first long side wall portion and the second long side wall portion may be opposite to each other. The first long side wall portion and the second long side wall portion may be spaced apart from each other in the Y direction (e.g., see FIG. 1).

The short side wall portion 230 may include a first short side wall portion and a second short side wall portion. The first short side wall portion and the second short side wall portion may be opposite to each other. The first short side wall portion and the second short side wall portion may be spaced apart from each other in the Z direction (e.g., see FIG. 1). The area of each of the first short side wall portion and the second short side wall portion may be smaller than the area of each of the first long side wall portion and the second long side wall portion.

Each of the opened first side 200 and the opened second side 210 may refer to an opening. The opened first side 200 and the opened second side 210 may be formed on opposite sides of the case 110, respectively. The opened first side 200 may be opposed to the opened second side 210. The opened first side 200 and the opened second side 210 may be spaced apart from each other in the X direction (e.g., see FIG. 1).

Referring to FIGS. 1 and 2, the first side plate 120 may seal the opened first side 200, and may be joined to (e.g., connected to or attached to) the case 110. The second side plate may seal the opened second side 210, and may be joined to (e.g., connected to or attached to) the case 110. For example, each of the first side plate 120 and the second side plate may be welded to the case 110.

Referring to FIG. 2, a vent hole 160 according to an embodiment may be formed in the first short side wall portion or the second short side wall portion. The vent hole 160 may be a single hole that is elongated along the length direction (x direction) of the first short side wall portion or the second short side wall portion, while passing through (e.g., while penetrating) the first short side wall portion or the second short side wall portion (in z direction). The vent portion 150 may be joined to (e.g., connected to or attached to) the circumference of the vent hole 160 to seal the vent hole 160. For example, the vent portion 150 may be welded to the circumference of the vent hole 160. The vent portion 150 may include a notch 150A that is ruptured in a case where the internal pressure of the case 110 exceeds a threshold pressure (e.g., a predefined or predetermined threshold pressure). The notch may be a portion defined by forming a groove of a suitable depth (e.g., a certain or predetermined depth). In some embodiments, the vent portion 150 may include a notch 150A that is ruptured in a case where the internal temperature of the case 110 exceeds a threshold temperature (e.g., a predefined or predetermined threshold temperature). The notch 150A may be a portion that is thinner than a circumferential portion. The shape of the notch 150A in a case where viewed from above the vent portion 150 (e.g., in a plan view) may have various suitable shapes, in addition to the shape illustrated in FIG. 2, and the present disclosure is not limited to any particular shape.

According to an embodiment, a bridge portion 400 may include (e.g., may be) one or more members connected to opposite ends of the vent hole 160. In other words, the one or more bridge portions 400 (each) connect (e.g. bridge) one end of the vent hole 160 (or e.g. side of the vent hole) with the opposite end of the vent hole 160 (or, e.g. opposite side in y direction of the vent hole; see Fig. 2). The one or more bridge portions 400 reinforce the structural rigidity of the case. This allows the case structure around the vent hole to maintain sufficient structural strength under internal pressure conditions until the vents rupture-activation point, ensuring rupture occurs at the intended time. The bridge portion 400 may be arranged at the lower end of the vent portion 150 joined to (e.g., connected to or attached to) the circumference of the vent hole 160. The bridge portion 400 may be an approximately plate-shaped member, and may be formed of the same material as that of the case 110. For example, the bridge portion 400 may be formed of a metal, such as aluminum, an aluminum alloy, or a nickel-plated steel. The number, the size, and the joining position of the bridge portion 400 are described in more detail below.

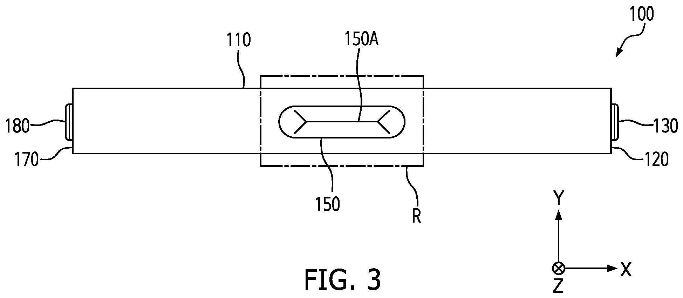

FIG. 3 illustrates a plan view of the secondary battery according to an embodiment of the present disclosure. FIG. 3 illustrates a top view of the first short side wall portion or the second short side wall portion. Hereinafter, a case where the vent portion 150 is arranged on the first short side wall is described in more detail as a representative example.

The first terminal 130 may be electrically connected to the first electrode plate (e.g., the negative electrode plate) of the electrode assembly. In some embodiments, the first terminal 130 may be exposed to the outside by passing through (e.g., penetrating) the first side plate 120. The second terminal 180 may be electrically connected to the second electrode plate (e.g., the positive electrode plate) of the electrode assembly. In some embodiments, the second terminal 180 may be exposed to the outside by passing through (e.g., penetrating) the second side plate 170.

Referring to FIG. 3, the position of the vent portion 150 may be at the center of the first short side wall portion of the case 110. The shape of the vent portion 150 may be oval or approximately oval, and the vent portion may be elongated in the X direction more than in the Y direction.

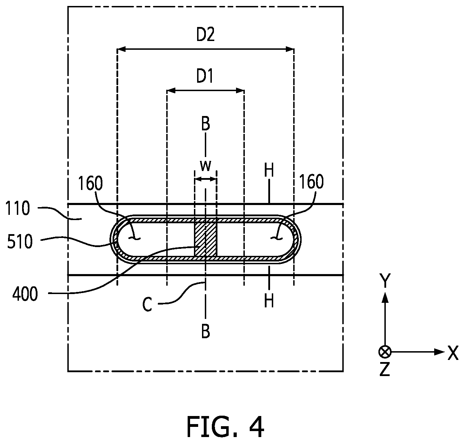

FIG. 4 illustrates an enlarged view showing an example of the area R in FIG. 3 from which a vent portion has been removed. The line B-B in FIG. 4 refers to a line that cuts through the bridge portion 400, and the line H-H refers to a line that cuts through the vent hole 160 where the bridge portion is not located.

According to an embodiment, the longitudinal direction of the bridge portion 400 (e.g. y direction in Fig. 2) may be parallel to or substantially parallel to the width direction of the first short-side wall portion of the case 110. The width direction of the first short side wall portion may be the Y direction in FIG. 4 or 2. In a case where the notch of the vent portion is ruptured in the absence of the bridge portion 400, the first short side wall portion around the vent hole 160 may be severely deformed in the Y direction due to the influence of internal pressure. Therefore, in order to reduce a deformation of the first short side wall portion of the case 110 in the Y direction, the bridge portion 400 may be arranged parallel to or substantially parallel to the width direction of the short side wall portion of the case 110.

In addition, in a case where the internal pressure of the case 110 approaches a threshold pressure (e.g., a predefined or predetermined threshold pressure), a deformation of the first short side wall portion in the Y direction around the vent hole 160 may be severe. For example, the first short side wall portion may be elongated in the Y direction, and the volume of the adjacent long side wall portion may be expanded accordingly. As a result, the notch of the vent portion may be ruptured at an early stage before the internal pressure of the case 110 reaches the threshold pressure. Accordingly, the bridge portion 400 connecting (e.g., connected to) opposite ends of the vent hole 160 may be arranged so that the case 110 around the vent hole 160 may maintain a sufficient structural rigidity until a target vent operation time is reached. Opposite ends of the vent hole 160 may refer to the inner ends of the vent hole 160 that are perpendicular to or substantially perpendicular to the width direction (e.g., the Y direction) of the short side wall portion.

Referring to FIG. 4, in an embodiment, one bridge portion 400 is illustrated, and the bridge portion 400 may be arranged in the center of the vent hole 160. In this case, vent holes 160 may be arranged at opposite sides of the bridge portion 400.

In addition, the length of the area where the bridge portions 400 may be formed at the left and right based on the center line c of the vent hole 160 may be within 25%, preferably 20%, of the total length D2 of the vent hole 160. Therefore, the total length D1 of the area where the bridge portion 400 may be formed may be within 50%, preferably 40%, of the total length D2 of the vent hole 160. As such, the total area of the vent hole 160 or the degassing area may be reduced by the bridge portion only as necessary, and thus, the gas discharge function may still be sufficiently performed.

The width w of one bridge portion 400 may be 6% or more, preferably 6% to 15%, of the total length D2 of the vent hole. The width w of one bridge portion and the total length D2 of the vent hole may be measured in x direction as shown in FIG.4. As such, a strain of the first short side wall portion around the vent hole 160 may be reduced through the arrangement of the bridge portion 400, thereby preventing or substantially preventing the vent portion from being ruptured at an early stage (e.g., from being prematurely ruptured).

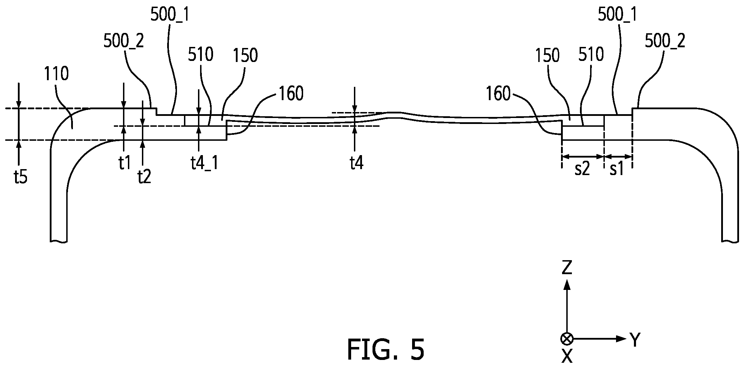

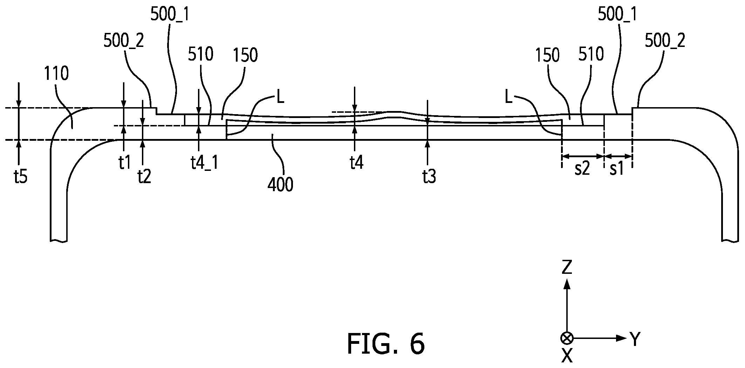

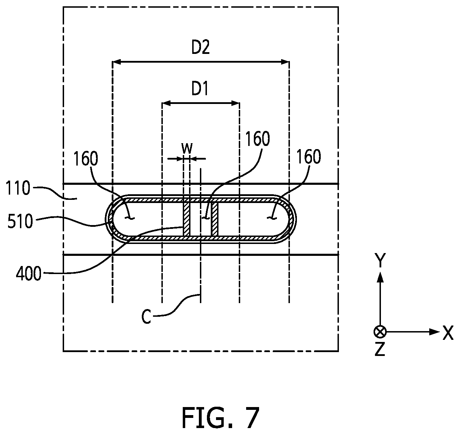

FIG. 5 illustrates a cross-sectional view taken along the line H-H of FIGS. 1 and 4. FIG. 6 illustrates a cross-sectional view taken along the line B-B of FIGS. 1 and 4. FIG. 5 illustrates a cross-section of a portion with the vent hole 160, and FIG. 6 illustrates a cross-section of a portion with the bridge portion 400. The cross-sections of the portion with the vent hole 160 and the portion with the bridge portion 400 in FIGS. 7 to 9, which are described in more detail below, may be the same or substantially the same as those described in more detail hereinafter with reference to FIGS. 5 and 6.

Referring to FIG. 5, a first step surface 500_1 and a second step surface 510 may be formed around the vent hole 160. The first step surface 500_1 may be formed to have a first step with an outermost surface 500_2 of the case 110, and the second step surface 510 may be formed to have a second step with the first step surface 500_1. The outermost surface 500_2 of the case 110 may refer to the outermost surface of the short side wall portion. In addition, the first step and the second step may refer to downward steps.

Referring to FIGS. 5 and 6, in an embodiment, the first step surface 500_1 may be arranged to form a horizontal plane with the upper surface of the vent portion 150. The upper surface of the vent portion 150 may refer to the upper surface of the edge portion of the vent portion. In some embodiments, the first step surface 500_1 may be connected to the upper surface of the vent portion 150. For example, the upper surface of the vent portion 150 may be joined to (e.g., connected to or attached to) the first step surface 500_1 through welding or thermal fusion. As another example, the vent portion 150 may be fixed to the second step surface 510 through overlapping welding. In this case, the upper surface of the vent portion 150 may form a horizontal plane with the first step surface 500_1, so that an unnecessary step that may cause the vent portion 150 to protrude outward from the first step surface 500_1 may be eliminated or reduced.

Referring to FIGS. 5 and 6, the length s2 of the second step surface 510 may be longer than the length s1 of the first step surface 500_1. The length may refer to the length in the Y direction. The second step surface 510 may extend from a side of the first step surface 500_1 towards a center of the vent hole 160. The length s2 of the second step surface 510 may be formed to be longer than the length s1 of the first step surface 500_1, so that the vent portion 150 may be stably seated in the vent hole 160 through the second step surface 510. Accordingly, under the same pressure inside the case 110, the connection portion of the side wall of the first step surface 500_1 of the vent portion 150 may not be ruptured before the notch on the vent portion 150. In some embodiments, the process of joining the vent portion 150 to the second step surface 510 may be facilitated. The joining may be performed by welding or thermal fusion.

In some examples, the vent portion 150 may be fixed to the second step surface 510 through overlapping welding. At the portion where the second step surface 510 and the vent portion 150 overlap with each other, the thickness t2 from the second step surface 510 to the innermost side may be equal to or greater than the thickness t4_1 of the edge of the vent portion 150. Accordingly, the area around the vent hole 160 of the case may be prevented from being unexpectedly deformed by imparting a rigidity through a relatively larger thickness during the overlap welding process.

The vent portion 150 may be formed in a suitable shape that is convex upward from the center, as illustrated in FIGS. 5 and 6. However, the present disclosure is not limited thereto, and the shape of the vent portion may be any suitable shape, for example, such as a shape that is convex upward between the center and the edge.

The thickness of the vent portion 150 is not uniform, and may vary depending on the area. For example, the edge thickness t4_1 of the vent portion 150 may be thicker than the thickness of other portions. This may be for increasing the bonding strength with the second step surface 510. In addition, in some embodiments, the thickness of the portion where the notch is formed may be thinner than the thickness of the surrounding portion.

Referring to FIGS. 5 and 6, the sum t1 of the first step and the second step may be equal to or greater than the total thickness t4 of the vent portion 150. The total thickness t4 of the vent portion 150 may refer to the maximum thickness of the vent portion 150. Due to the first step and the second step, the case 110 may be recessed around the vent hole 160. As such, the vent portion 150 may be prevented from protruding outward from the short side wall portion of the case 110.

In some embodiments, the first step may not be formed on the case 110. In this case, the first step surface 500_1 of the case 110 may form the same surface as the outermost surface 500_2. In addition, the outermost surface 500_2 may form a horizontal plane with the upper surface of the edge of the vent portion 150.

Referring to FIG. 6, the length s2 of the second step surface 510 may be longer than the length s1 of the first step surface 500_1, and the positions of opposite ends of the vent hole 160 to which the bridge portion 400 is connected may be determined depending on the degree of protrusion of the second step surface 510. In addition, the length between opposite ends of the vent hole 160 may determine the length of the bridge portion 400.

Referring to FIG. 6, in an embodiment, the upper surface of the bridge portion 400 may form the same horizontal plane as the second step surface 510. In addition, the upper surface of the bridge portion 400 may be connected to the second step surface 510. The joining may be performed by welding or thermal fusion.

In an embodiment, the upper surface of the bridge portion 400 may be formed integrally with the second step surface 510. For example, the bridge portion 400 may be a part of the case 110. In more detail, there may be no seam on an imaginary line L between the protruding portion of the second step surface 510 and the bridge portion 400. The bridge portion 400 may be formed by calculating an area where the vent portion 150 is to be joined on one side or the first short side wall portion of the case 110, and then performing a precise mold processing so that the bridge portion 400 is formed in the corresponding area. In some embodiments, a portion where the vent hole 160 is to be formed may be pierced through a cutting process to manufacture the bridge portion 400 from the portion remaining after cutting.

As described above, by forming the bridge portion 400 integrally with the second step surface 510, secondary processes, such as welding or thermal fusion, for connecting the bridge portion 400 to the case 110 may not be used or required. Accordingly, a loss due to an increase in the number of parts and manufacturing processes due to the manufacturing of the bridge portion 400 and an increase in manufacturing costs may be reduced.

In an embodiment, the thickness t3 of the bridge portion may be equal to or less than the value obtained by subtracting the sum of the first step and the second step from the thickness t5 of the short side wall portion of the case 110. Referring to FIG. 6, the thickness t3 of the bridge portion may be smaller than the thickness t2 from the second step surface 510 to the lowest end surface. Accordingly, the area where the electrode assembly may be arranged inside the case 110 may not be reduced due to the arrangement of the bridge portion 400. For example, the electrode assembly may be arranged at the lower end of the bridge portion 400 with insulating tape therebetween. The insulating tape is a suitable material that surrounds (e.g., around a periphery of) the electrode assembly, and may fix the electrode assembly and insulate the electrode assembly from the case 110.

In an embodiment, the thickness t3 of the bridge portion 400 may be determined by considering the degassing area through which gas inside the case 110 may be substantially discharged. The degassing area may refer to the area excluding the area occupied by the bridge portion 160 from the total area of the vent hole 160. As the degassing area increases, the thickness of the bridge portion may be increased, so that the strain of the short side wall portion in the Y direction may be within an allowable range. The allowable range of the strain of the short side wall portion in the Y direction may be, for example, within about 10% of the length of the initial short side wall portion in the Y direction.

According to an embodiment, the thickness t3 of the bridge portion 400 may be 35% to 55% of the thickness t5 of the first short side wall portion of the case 110. For example, the thickness t3 of the bridge portion 400 may be 0.3 mm to 0.8 mm, preferably (about) 0.5 mm.

The allowable range of the strain of the short side wall portion in the Y direction, which is to be achieved through the bridge portion 400, may be within about 10% of the length in the Y direction. The allowable range of the strain of the single side wall portion in the Y direction may be calculated as the strain so that the rupture of the notch may occur at a threshold rupture pressure (e.g., a predefined or predetermined rupture pressure). For example, in a case where the initial length of the short side wall portion in the Y direction is 24.64 mm, the case may be allowed to be deformed up to 27.104 mm in the Y direction.

According to an embodiment, the thickness t3 of the bridge portion 400 may be 35% to 55% of the thickness t5 of the first short side wall portion of the case 110. For example, the thickness t3 of the bridge portion 400 may be 0.3 mm to 0.8 mm, preferably (about) 0.5 mm.

Referring to FIG. 6, the bridge portion 400 may be arranged at the lower end of the vent portion 150, and the bridge portion 400 and the vent portion 150 may not be directly connected to each other. In addition, there may be an empty space between the bridge portion 400 and the vent portion 150.

FIGS. 7 through 9 illustrate enlarged views showing examples of the area R of FIG. 3 from which the vent portion has been removed.

In some embodiments, the number and the thickness of the bridge portions 400 may be variously modified as needed or desired. According to an embodiment, a plurality of bridge portions 400 may be connected to opposite ends of the vent hole 160. Referring to FIG. 7, in a case where an even number of bridge portions 400 are provided, the bridge portions 400 may be arranged symmetrically or substantially symmetrically with one another based on the center of the vent hole 160. In this case, the bridge portion 400 may not be arranged in the center of the vent hole 160.

The bridge portions 400 may be located within a suitable area (e.g., a certain or predetermined area, such as an area having a length of D1). The length of the area (e.g., the area with a length of D1) may be within 25% of the maximum length D2 of the vent hole 160 at the left and right based on the center line c of the vent hole 160.

In addition, even in a case where there are a plurality of bridge portions 400, the width w of one bridge portion 400 may be at least 6% of the maximum length D2 of the vent hole 160. Accordingly, the bridge portion 400 may prevent or substantially prevent a deformation of the short side wall portion around the vent hole 160, thereby preventing the vent portion from being ruptured at an early stage.

According to an embodiment, in a case where there are a plurality of bridge portions 400, the widths w of the bridge portions 400 may be equal to or substantially equal to each other. Accordingly, the bridge portions 400 may reduce the strain of the short side wall portion around the vent hole 160, thereby preventing the vent portion from being ruptured at an early stage.

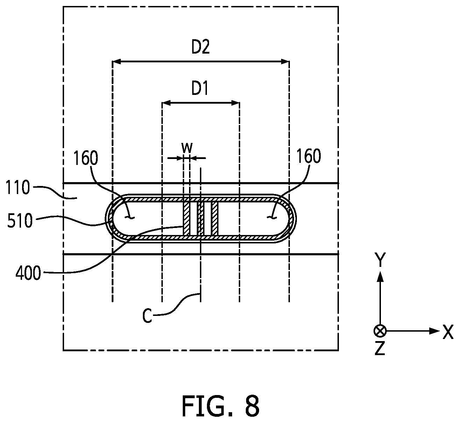

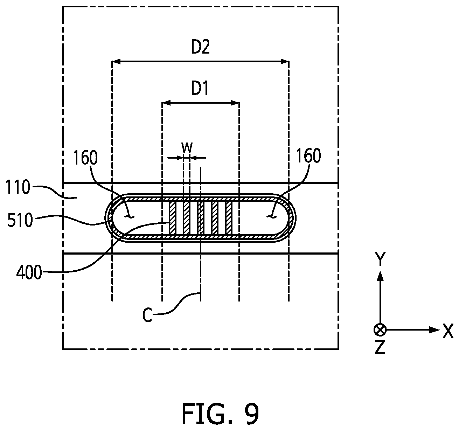

Referring to FIGS. 8 and 9, in a case where an odd number of bridge portions 400 are provided according to some embodiments, one bridge portion 400 may be arranged in the center of the vent hole 160, and the other remaining bridge portions 400 may be arranged symmetrically or substantially symmetrically with one another with respect to the center of the vent hole 160. Even in this case, the bridge portions 400 may be located within a suitable area (e.g., a certain or predetermined area, such as an area having a length of D1). The length of the area (e.g., the area with a length of D1) may be within 25% of the maximum length D2 of the vent hole 160 at the left and right based on the center line c of the vent hole 160.

In addition, even in a case where there is an odd number of bridge portions 400, the width w of one bridge portion 400 may be at least 6% of the maximum length D2 of the vent hole 160. As such, the bridge portion 400 may prevent or substantially prevent a deformation of the short side wall portion around the vent hole 160, thereby preventing the vent portion from being ruptured at an early stage.

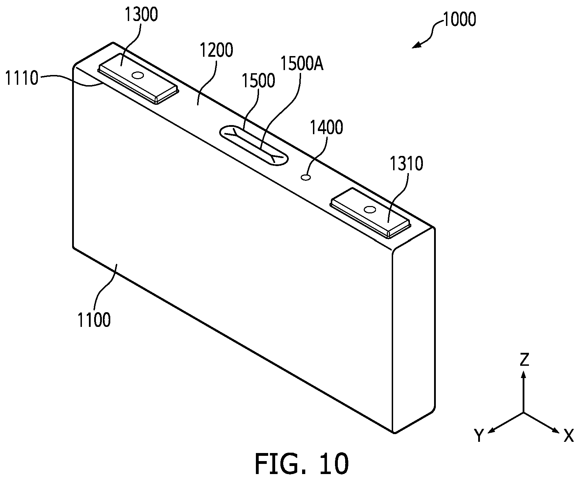

FIG. 10 illustrates a perspective view of a secondary battery according to an embodiment of the present disclosure. Hereinafter, redundant description as those above may not be repeated.

A secondary battery 1000 according to an embodiment may include an electrode assembly, a case 1100 accommodating the electrode assembly therein and having one opened end, and a cap plate 1200 joined to (e.g., connected to or attached to) the opened end of the case 1100. The cap plate 1200 may be joined to (e.g., connected to or attached to) the opened upper end of the case 1100 by welding to seal the case 1100.

A vent portion 1500 having a notch 1500A formed therein, a first terminal (e.g., a negative terminal), and a second terminal (e.g., a positive terminal) may be arranged on the cap plate 1200. In addition, a vent hole in which the vent portion 1500 is seated, and an electrolyte injection port 1400 into which electrolyte is injected and which is blocked with a stopper or the like, may be formed on the cap plate 1200.

The electrode assembly accommodated in the case 1100 may be formed by winding or stacking a stack of a first electrode plate, a second electrode plate, and a separator interposed between the first electrode plate and the second electrode plate. A first electrode tab connected to the first electrode plate and a second electrode tab connected to the second electrode plate may be formed on one side of the electrode assembly. The first electrode tab may be electrically connected to a first terminal 1300, and the second electrode tab may be electrically connected to a second terminal 1310.

In an embodiment, one or more bridge portions connecting opposite ends of the vent hole on the cap plate 1200 may be formed. The vent portion 1500 may seal the vent hole, and may be arranged on the one or more bridge portions. The configuration of the vent portion 1500 and the vent hole is the same or substantially the same as those described above. However, the bridge portion may be designed and arranged in a way that secures the structural rigidity of the cap plate, rather than those of the short side wall section. For example, compared to one side of the case (e.g., 110 of FIG. 2) in the secondary battery described above with reference to FIGS. 1 to 9, the cap plate 1200 in FIG. 10 is arranged adjacent to or joined to (e.g., connected to or attached to) structures such as an insulating plate, a sub-plate, and a current collector plate, so that a rupture of the vent portion 1500 at a predefined fracture pressure may occur relatively late. Accordingly, the size and arrangement of the bridge portion to prevent rupture at an early stage may be variably designed accordingly.

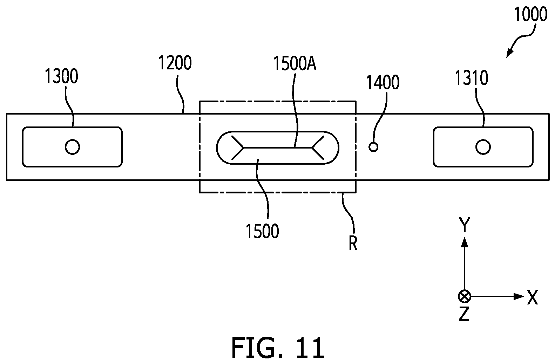

FIG. 11 illustrates a plan view of a secondary battery according to an embodiment of the present disclosure. Fig. 11 illustrates a plan view of the cap plate 1200 of FIG. 10.

In FIG. 11, the area R around the vent portion 1500 arranged on the cap plate 1200 is the same or substantially the same as that described above with reference to FIGS. 1 to 9. In an embodiment, the longitudinal direction of the bridge portion may be parallel to or substantially parallel to the width direction (e.g., the Y direction) of the cap plate 1200. For example, one bridge portion may be provided in the center of the vent hole.

As another example, an even number of bridge portions may be arranged symmetrically or substantially symmetrically with one another with respect to the center of the vent hole. As another example, the number of bridge portions may be odd. In this case, one bridge portion may be arranged in the center of the vent hole, and the other remaining bridge portions may be arranged symmetrically or substantially symmetrically with one another with respect to the center of the vent hole.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### Description of some reference Symbols

100: secondary battery
110: case
120: first side plate
130: first terminal

## Claims

1. A secondary battery (100,1000) comprising:
an electrode assembly;
a case (110,1100) accommodating the electrode assembly therein;
a vent hole (160) in the case (110,1100);
one or more bridge portions (400) connected to opposite ends of the vent hole (160); and
a vent portion (150,1500) sealing the vent hole (160).

2. The secondary battery (100) as claimed in claim 1, wherein the case (110) comprises:
an opened first side (200);
an opened second side (210) opposite to the opened first side (200);
a first long side wall portion (220) and a second long side wall portion spaced from each other; and
a first short side wall portion (230) and a second short side wall portion spaced from each other, and having smaller areas than those of the first long side wall portion (220) and the second long side wall portion,
wherein the vent hole (160) is located in the first short side wall portion (230).

3. The secondary battery (100) as claimed in claim 2, wherein a longitudinal direction of the one or more bridge portions (400) is parallel to a width direction of the first short side wall portion (230).

4. The secondary battery (100) as claimed in one of the preceding claims, wherein the one or more bridge portions (400) comprise one bridge portion (400) located in a center of the vent hole (160).

5. The secondary battery (100) as claimed in one of claims 1 to 3, wherein the one or more bridge portions (400) comprise an even number of bridge portions (400) symmetrically located with one another with respect to a center of the vent hole (160).

6. The secondary battery (100) as claimed in one of claims 1 to 4, wherein the one or more bridge portions (400) comprise an odd number of bridge portions (400),
wherein one bridge portion (400) from among the odd number of bridge portions (400) is located in a center of the vent hole (160), and
wherein other remaining bridge portions (400) from among the odd number of bridge portions (400) are located symmetrically with one another with respect to the center of the vent hole (160).

7. The secondary battery (100) as claimed in one of the preceding claims, wherein a length (D1) of an area where the one or more bridge portions (400) are located from left to right based on a center line (C) of the vent hole (160) is within 25% of a total length (D2) of the vent hole (160).

8. The secondary battery (100) as claimed in one of the preceding claims, wherein a width (w) of each of the one or more bridge portions (400) is 6% or more of a total length (D2) of the vent hole (160).

9. The secondary battery (100) as claimed in one of the preceding claims, wherein a circumference of the vent hole (160) comprises a first step surface (500_1) having a first step with an outermost surface (500_2) of the case (110), and a second step surface (510) having a second step with the first step surface (500_1),
wherein the first step surface (500_1) is connected to an upper surface of the vent portion (150), and
wherein the second step surface (510) is connected to an upper surface of the one or more bridge portions (400).

10. The secondary battery (100) as claimed in claim 9, wherein a length (s2) of the second step surface (510) is greater than a length (s1) of the first step surface (500_1).

11. The secondary battery (100) as claimed in claims 9 or 10, wherein the upper surface of the one or more bridge portions (400) is integral with the second step surface (510).

12. The secondary battery (100) as claimed in one of claims 9 to 11, wherein a thickness of the one or more bridge portions (400) is equal to or less than a value obtained by subtracting a sum of the first step and the second step from a thickness of the case (110).

13. The secondary battery (100) as claimed in claim 2, wherein a thickness of the one or more bridge portions (400) is 35% to 55% of a thickness of the first short side wall portion (230).

14. The secondary battery (1000) of claim 1, wherein
the case (1100) comprising one opened end and a cap plate (1200) joined to the one opened end of the case (1100); and
the vent hole being in the cap plate (1200) of the case (1100).

15. The secondary battery (1000) as claimed in claim 14, wherein a longitudinal direction of the one or more bridge portions (400) is parallel to a width direction of the cap plate (1200).
